# EUROPEAN PATENT SPECIFICATION

(11) **EP 2 546 819 B1**
(45) Date of publication and mention of the grant of the patent: **03.06.2015**
(21) Application number: 11771731.4
(22) Date of filing: 14.04.2011
(51) Int. Cl.: G08G 1/16, B60R 1/00, G06T 1/00, G06T 3/00, G06K 9/00, G08G 1/0962, G06T 7/00

(54) **DEVICE FOR MONITORING VICINITY OF VEHICLE**
VORRICHTUNG ZUR ÜBERWACHUNG DER UMGEBUNG EINES FAHRZEUGS
DISPOSITIF POUR SURVEILLER LE VOISINAGE D'UN VÉHICULE

(30) Priority: 19.04.2010 JP 2010096054
(43) Date of publication of application: 16.01.2013
(73) Proprietor: Honda Motor Co., Ltd., Minato-ku Tokyo 107-8556 (JP)
(72) Inventor: MATSUDA, Kodai, Wako-shi Saitama 351-0193 (JP); AIMURA, Makoto, Wako-shi Saitama 351-0193 (JP); NAKAMURA, Yusuke, Wako-shi Saitama 351-0193 (JP)
(74) Representative: Weickmann & Weickmann
(86) International application number: PCT/JP2011/002206
(87) International publication number: WO 2011/132388

(56) References cited:
- JP-A- 2000 168 403
- JP-A- 2000 168 474
- JP-A- 2006 224 700
- JP-A- 2008 123 443
- US-A1- 2008 007 428

## Description

### Technical Field

The present invention relates to a system for monitoring surroundings of a vehicle, and more specifically to a system for controlling modes of display according to monitoring of the surroundings of a vehicle.

### Background Art

It is conventional to mount an imager (imaging device) on a vehicle and to display images of the surroundings of the vehicle captured by the imager on a monitor (display device). When one or more specific objects are in the captured image, a warning is provided to draw a driver's attention.

When such warning is provided quite often, the driver would feel bothered. To avoid it, the patent literature 1 identified below describe a scheme of determining a direction of gaze by the driver and a direction needing to be gazed to collect information that is required for driving wherein the frequency of matching of the two directions is determined, and based on the frequency, a level of notification of the information to be provided to the driver is determined. With this scheme, the driver is less bothered and yet is given appropriate information about the situations that the driver is not knowledgeable. A system with the features of the preamble part of claim 1 and a method with the features of the preamble part of claim 7 are known from US 2008/007428 A1.

(Patent Literature 1)
Japanese Patent No. 2929927

### Summary of Invention

### Technical Problem

When a monitor is provided remote from the direction of the driver's line of sight, large movement of the line of sight is required for the driver to recognize the monitor screen. There is a need for a technology that enables the driver to quickly recognize the information displayed on the monitor screen (enhancement of instantaneous recognition). With enhancement of instantaneous recognition, the drive may be prompted to gaze forward.

Accordingly, it is an object of the present invention to control the volume of information in a monitor screen according to the position of the monitor and to provide display modes that optimize driver's gazing of the monitor screen and of forward direction.

### Solution to Problem

In the present invention there is provided a system, according to claim 1, and a method, according to claim 7, for monitoring the surroundings of a vehicle.

According to one aspect of the present invention, the system for monitoring surroundings of a vehicle comprises a detector that detects objects in the surroundings of the vehicle based on images captured by an imager (imaging device), and a plurality of display devices for displaying images produced from the images captured by the imager. The system is configured to alert the driver of the objects via one or more of the display devices. The display devices are placed at a plurality of positions that the driver may gaze. The system is configured to provide less information to a display device that requires a large movement of the driver's line of sight to gaze the display device relative to the driver's line of sight gazing straight forward.

Generally, instantaneous recognition lowers as the information displayed in the monitor screen increases. According to the present invention, the volume of information decreases for the display unit that requires large movement of the driver's line of sight so that instantaneous recognition is enhanced for monitor screen requiring a large movement of the driver's line of sight, whereby the driver's gaze at the monitor screen and gaze at straight forward are optimized.

According to one embodiment of the present invention, the system calculates a time for the vehicle to reach an object. The difference of the volume of information to be displayed on respective monitor screens placed at a plurality of places is set small as the time for the vehicle to reach an object is large.

The larger the time for the vehicle to reach an object, the larger the lead time for recognizing the object is. Therefore, under such conditions, a same amount of information may be displayed on each display device for the convenience of the vehicle's passengers.

According to one embodiment of the invention, the system includes a detector that detects passengers other than the driver in the vehicle. When one or more passengers are detected, the system suppresses reduction of the volume of information to be displayed on a display device placed near the one or more passengers.

According to the present invention, when a passenger is on a front passenger's seat, reduction of information to be displayed on a display device near the passenger is suppressed to enhance usability by the passenger.

The other features and advantages of the present invention will be appreciated from the description below.

### Brief Description of Drawings

Fig. 1 illustrates a block diagram of the system for monitoring surroundings of a vehicle according to one embodiment of the present invention.
Fig. 2 illustrates positions for mounting a plurality of display devices and one or more cameras.
Fig. 3 illustrates a flow chart of the process performed in a image processing unit.
Fig. 4 shows examples of display modes for the plurality of display devices.
Fig. 5 shows the other examples of display modes for the plurality of display devices.
Fig. 6 illustrates a flow chart of the process in the image processing unit according to one embodiment of the present invention.
Fig. 7 illustrates examples of display modes for the plurality of display devices according to one embodiment of the present invention.
Fig. 8 is a block diagram of a system for monitoring surroundings of a vehicle according to another embodiment of the present invention.
Fig. 9 is a flow chart of the process in the image processing unit in accordance with another embodiment of the present invention.
Fig. 10 illustrates display modes for the plurality of display devices according to another embodiment of the present invention.

### Description of Embodiments

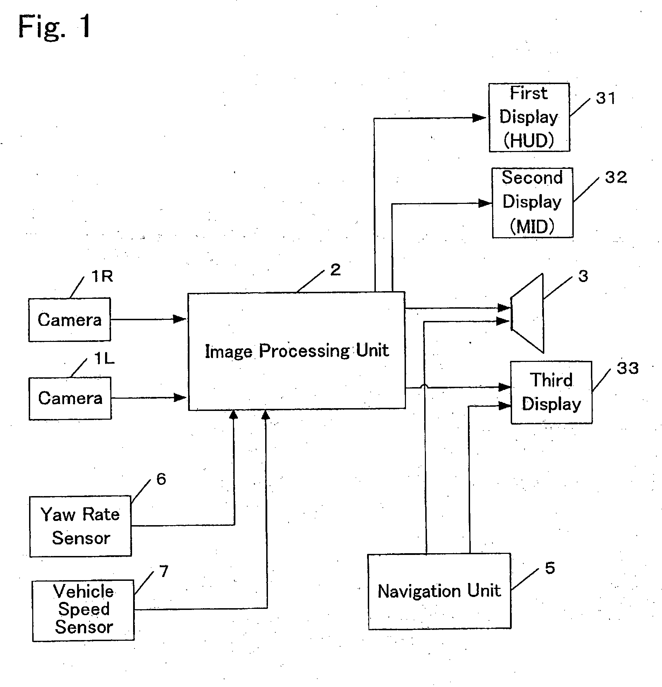

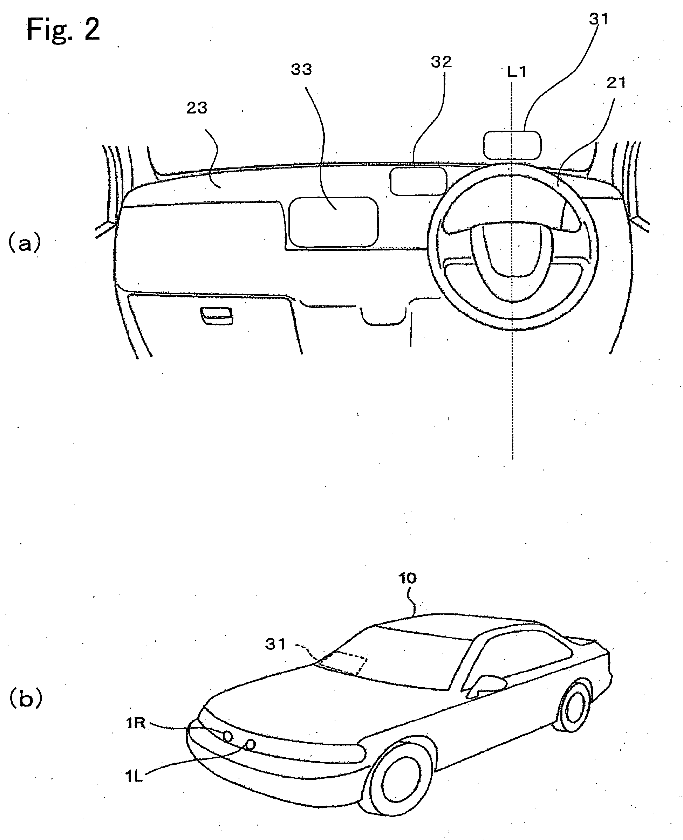

Referring to the attached drawings, embodiments of the present invention will be described. Fig. 1 is block diagram of the system for monitoring surroundings of a vehicle provided with a plurality of display devices according to one embodiment of the present invention. Fig. 2 illustrates mounting of the plurality of display devices and one or more cameras to the vehicle. The plurality of display devices are shown as a first to a third display device 31, 32, 33, each placed at positions visible by the driver.

The system for monitoring surroundings of a vehicle is mounted to a vehicle and comprises far infrared cameras 1R, 1L and an image processing unit 2 that detects one or more objects in the surroundings of a vehicle based on image data captured by cameras 1R and 1L. The system further comprises a speaker 3 that produces warning by voice based on the detection results from the image processing unit 2, and a first display device 31 that displays images based on the image captured by camera 1R or 1L. The system also comprises a yaw rate sensor 6 that detects yaw rate of a vehicle, and speed sensor 7 that detects travel speed of the vehicle. The outputs from these sensors are sent to the image processing unit 2.

In the embodiment, as illustrated in Fig. 2(a) and Fig. 2(b), cameras 1R and 1L are placed in the front portion of the vehicle 10 symmetrically with respect to a central axis passing the center of vehicle width in order to capture images ahead of the vehicle 10. The two cameras 1R and 1L are fixed to the vehicle such that their optical axes are parallel to each other and their heights from the ground are the same. Infrared cameras 1R and 1L have the characteristics of producing higher level of output signals as the temperature of an object is higher (that is, higher intensity in the captured image).

As illustrated in Fig. 2(a) and Fig. 2(b), the first display device 31 is a so called head-up display (HUD) that is provided in a front window so as to display a monitor screen in front of the driver. Line L1 passes through the center of a steering wheel 21 and extends from front to rear, indicating the driver's line of sight when the driver is facing ahead (in the drawing, the line is drawn as if it is a vertical line). The first display device 31 is placed such that its center in the width direction is on line L1.

In this embodiment, a navigation system is installed in the vehicle. The navigation system comprises a navigation unit 5 and a third display device 33. The third display device 33 is placed on a dashboard of the vehicle as shown in Fig. 2(a), and is in a predetermined or a specified distance from the line L1.

Navigation unit 5 comprises a computer having a central processing unit (CPU) and a memory, and also comprised a communications unit (not shown) that receives GPS signal from artificial satellites, the GPS signal being used to measure the location of the vehicle 10. The navigation unit 5 detects the location of the vehicle based on the GPS signal. The navigation unit 5 overlaps an image showing the current position of the vehicle onto map of the surroundings of the vehicle to display on the third display device 33. The map of the surroundings of the vehicle may be stored in the memory of the navigation system or may be received from a server via the communications unit.

The monitor screen of the third display device 33 may be made of a touch panel. The driver of the passenger of the vehicle may enter a destination into the navigation unit with the use of the touch panel or other input devices such as keys and buttons. The navigation unit 5 determines a best route to the destination and overlaps an image of the best route onto the map to display on the third display device 33.

The navigation unit 5 is connected to a speaker 3, and provides guidance to the driver and passenger about stop signs and crossings by sound or voice via the speaker 3, in addition to providing display on the third display device 33. The navigations devices in the market today include various functions such as supply of traffic information and guidance on nearby facilities, any one of such navigation devices may be used for embodiments of the present invention.

Further, according to one embodiment, a second display device 32 is provided on an instrument panel of the vehicle in the width direction of the vehicle and between the first and the third display devices, as shown in Fig. 2(a). The distance from the line L1 to the second display device 32 is smaller than the distance to the third display device 33. The second display device 32 may be made of a liquid crystal display, so called multi information display (MID) capable of displaying multiple sorts of information. For example, the second display device is configured to display multiple sorts of information on driving conditions of the vehicle (speed, revolution, mileage).

Image processing unit 2 comprises an A/D convertor circuit that converts input analog signal into digital signal, an image memory that stores digitized image signal, a central processing unit (CPU) for performing various computations, a RAM (random access memory) for temporarily storing data computed by the CPU, a ROM (read only memory) that stores computer programs to be executed by the CPU and data (tables, maps), and output circuit for supplying driving signal to speaker 3 and display signal to the first to third display devices 31, 32 and 33. Output signals from cameras 1R and 1L are converted to digital signals and are sent to CPU.

The first, second and third display devices 31, 32 and 33 are respectively connected to image processing unit 2 of the embodiment, and present images processed by the image processing unit 2. A switching mechanism may be provided to the second and the third display devices for switching the contents to be displayed for example. For the second display device 32, switching may be made between presentation of images from the image processing unit 2 and presentation of regular information, and for the third display device, switching may be made between presentation of images from the image processing unit and presentation of information supplied by the navigation unit 5.

As described above, vehicles today may be provided with a plurality of display devices. For the display device placed remote from the line L1 requires a large movement of the driver's line of sight to gaze the display screen. Thus, enhancement of instantaneous recognition is desired for such a display device.

Accordingly, in one embodiment of the present invention, the image processing unit 2 controls the volume of information in the images to be presented on the display screen based on the results of processing by the image processing unit 2. Specifically, for the display device placed remote from the driver's line of sight gazing straight forward (the above mentioned line L1), the volume of display image is reduced. Thus, as the display device is placed remote from the driver, display content is made feasible for instantaneous recognition. This way, gazing by the driver at the display screen and gazing ahead are optimized (balanced). A specific manner will be described below.

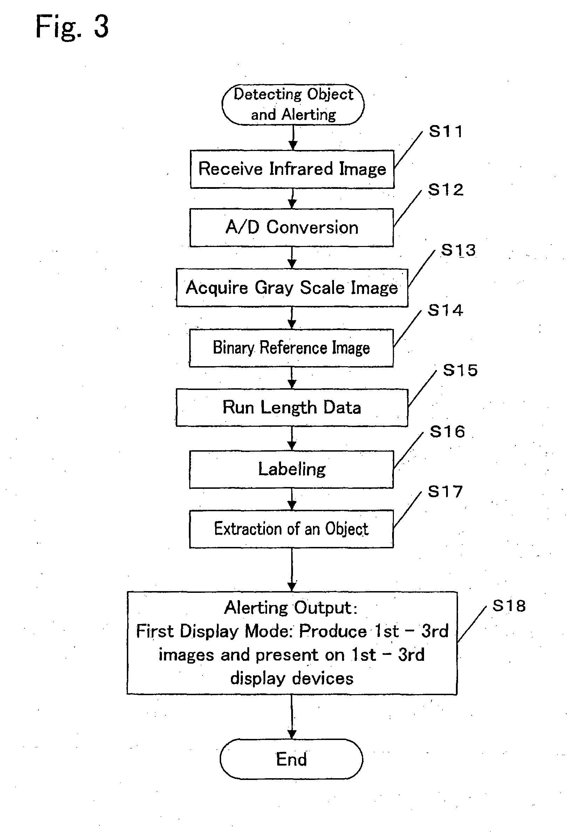

Fig. 3 is a flow chart of the process performed by image processing unit 2 in one embodiment of the present invention. This process is repeated with predetermined intervals.

In steps S11 to S13, image processing unit 2 receives output signals from cameras 1R and 1L, performs A/D conversion on the output signals and stores the converted data in an image memory. The stored image data is grayscale image including intensity information.

In step S14, the image data is binary coded with the right image captured by camera 1R functioning as a reference image (alternatively, the left image may be used as a reference image). Specifically, regions having intensity larger than an intensity threshold ITH are coded to "1" (white) and regions having intensity lower than the threshold are coded to "0" (black). The intensity threshold may be determined by an appropriate scheme. With this binary coding, objects such as living bodies having higher temperature than a predetermined or a specified temperature are extracted as white regions.

In step S15, binary coded image data is converted into run length data. Specifically, for the region converted to white with the binary coding, run length data is formed as the length (expressed in terms of the number of pixels) from a starting point of the white region in a line of pixels and to the ending point of the white region. Here, the vertical direction in the image is given y axis and the horizontal direction is given x axis. For example, if the white region is from (x1, y1) to (x3, y1), that is, a line of three pixels, run length data may be expressed as (x1, y1, 3).

In steps S16 and S17, labeling of one or more objects is performed and the objects are extracted(detected). That is, out of the run length coded lines, lines sharing y axis are assumed to belong to an object, to which a label is attached. This way, one or more objects are extracted (detected).

In the following description, the detected objects are pedestrians. After step S17, a determination process may be added to determine if the detected objects are pedestrians. This determination process may be performed with any one of appropriate schemes. For example, a well known pattern matching scheme may be used to calculate similarity between the detected objects and predetermined or specified patterns of pedestrians. High similarity results in determination of pedestrians. Examples of such schemes may be seen in Japanese patent application publication Nos. 2007-241740 and 2007-334751.

In step S18, warning output is made relative to the detected objects by presenting display of the detected objects. Specifically, based on the grayscale image of the objects, a first, second and third images to be displayed on the first, second and third display devices 31, 32 and 33 respectively are produced and presented to the display devices31, 32 and 33 respectively. The images are produced such that the information volume decreases from the first image to the third image. The information volume corresponds to the image content that a person may recognize from the image. As the features (not only living bodies such as pedestrians, but also architectures, other vehicles and other artificial features) imaged in the image increases, the information volume increases, making it difficult to instantaneously recognize the contents of the image (lowering of instantaneous recognition). The mode where information volume decreases from the first image to the third image is called a first display mode.

There are a number of methods for producing display images according to the first display mode. A first and a second methods are described below.

According to the first method, the first image includes other features than the detected objects as recognizable features, the second image includes only the detected objects as substantially recognizable features, and the third image does not include the detected objects and other features as recognizable features.

Specifically, in the first method, the first image is the above mentioned grayscale image. In the second image, the image region other than the object, that is, the image region other than the image region corresponding to the objects detected in step S17, is made substantially non-recognizable. For example, the difference between the intensity of pixels in the regions other than the objects and the background intensity is decreased to lower the contrast of the regions other than the objects making such regions substantially non-recognizable. Alternatively, the intensity of pixels in the regions other than the object regions may be decreased by a predetermined or a specified value or may be replaced with a predetermined or a specified low intensity. This way, the second image is produced such that substantially the object regions are recognizable (legible).

In the third image, object regions are made non-recognizable by decreasing the intensity of all pixels in the grayscale image by a predetermined or a specified amount or replacing the intensity of all pixels in the grayscale image by predetermined or specified intensity. This way, the third image looks as if no images are captured, or the captured image is not displayed. Alternatively, without converting the intensity of pixels, presentation of the third image may be suppressed.

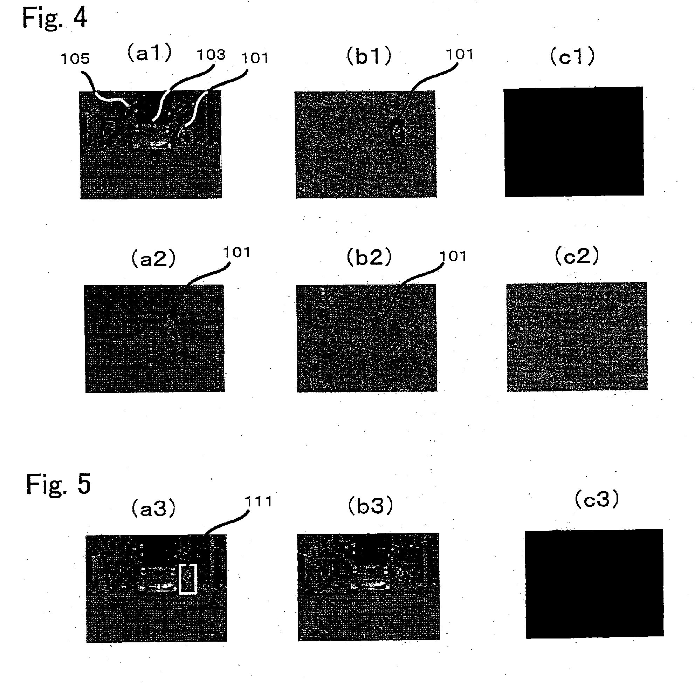

One example of thus produced images are shown in Fig. 4. Fig. 4(a1) shows the first image, Fig. 4(b1) the second image, and Fig. 4(c1) the third image. The first image is a grayscale image presenting in addition to pedestrian 101, recognizable image of another vehicle 104, street light 105
and other features. The second image is produced by lowering the contrast of the regions other than the object regions, and presents recognizable image of only the object or pedestrian 101. In the third image, images are in effect not presented as a result of conversion of all pixels of the grayscale image into predetermined or specified low intensity (black intensity in this example).

From Fig. 4, it will be appreciated that the volume of information that the driver may recognize from the screen image decreases from the first image to the third image. The first image includes pedestrian 101, another vehicle 103, street light 105 and other things so that the driver will try to recognize these features. The second image includes pedestrian 101 only so that the driver may recognize it quickly with much shorter time than for the first image. The third image does not substantially include any features so that the driver receives no information. Less information to receive from the screen image will prompt the driver to gaze forward.

As an alternative to the first method, the second image may be produced by decreasing the contrast of the entire first image that is a grayscale image. For example, intensity of pixels may be reduced to decrease the difference between the largest intensity and the smallest intensity to produce the second image with decreased contrast. As the contrast is lowered, intensity of all the objects that are imaged approaches the intensity of the background to produce a blurred image as a whole. This means that the volume of recognizable information decreases. However, preferably, the decrease of contrast in the second image should be set to the extent that would make the detected objects recognizable. Thus, the second image may be produced to enable substantial recognition of the object regions only. The third image may be produced by further decreasing the contrast of the second image to present no substantial screen images.

In lieu of decreasing the contrast, intensity of all pixels in the gray scale image may be reduced uniformly by a predetermined or specified value to produce a dark image. For the second image, intensity may be reduced such that only the object region is recognizable.

Fig. 4 shows examples of the images that are processed to reduce the contrast as described above. Fig. 4 (a2) shows a first image of a gray scale image. Fig. 4 (b2) shows a second image that is processed to reduce the contrast of the entire gray scale image. The object region where pedestrian 101 is imaged has a high intensity in the gray scale image and is still recognizable in the low contrast image as can be seen in the drawing. Fig. 4 (c2) shows a third image that is processed to further reduce the contrast of the entire image. With large reduction of the contrast, the image does not essentially include any visible features.

As a further alternative embodiment, a first image may be produced by increasing the contrast of the gray scale image, which is named a second image. A third image may be produced by decreasing the contrast of the gray scale image. However, high contrast may spoil intermediate colors so that information volume may reduce. Thus, increase of the contrast should be controlled such that information recognizable from the first image is larger than that of the second image.

In a second scheme, the objects detected in step S17 are emphasized in the first image, the second image being without such emphasis. The third image is made such that no objects are recognizable in the screen image.

An example of such a scheme is shown in Fig. 5. Fig. 5 (a3) shows a first image, which differs from the image shown in Fig. 4 (a1) in that a frame 111 is added to emphasize the detected object (pedestrian). The frame 111 increases the information provided to the driver as compared to the image of Fig. 4 (a1) as the frame will be recognized by the driver as one additional information. Fig. 5 (b3) shows a second image, which is the same gray scale image as Fig. 4 (a1). Alternatively, the second image may be an image produced by superimposing an emphasizing frame to the image of Fig. 4 (b1) or (b2). Fig. 5 (c3) shows a third image, which is the same as Fig. 4 (c1). Alternatively, the third image may be an image like the one shown in Fig. 4 (c2) with reduced contrast.

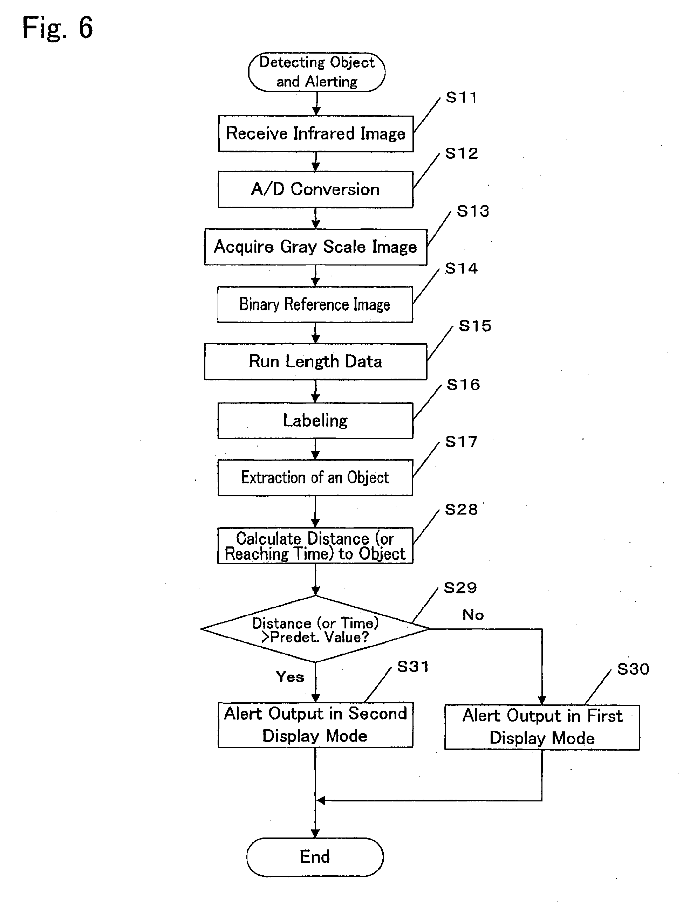

Fig. 6 illustrates a flow chart of a process to be performed by the image processing unit 2 according to another embodiment of the present invention. This process is performed with a predetermined or a specified time interval. The process differs from that illustrated in Fig. 3 in that display modes are changed according to the distance to the object and the time the vehicle reaches the object.

Steps S11- S17 are the same as those in Fig. 3. In step S28, the distance to the object extracted (detected) in step S17 is calculated. The calculation may be performed with a well known scheme described in, for example, Japanese Patent Publication 2001-6096. Alternatively, a time for the vehicle to reach the object may be calculated. The reaching time may be calculated by dividing the distance with a vehicle speed detected by a speed sensor for the vehicle.

In step S29, whether or not the distance (or the time) thus calculated is larger than a predetermined value is determined. If the decision is negative, the process proceeds to step S30 where the first, second and third images are produced according to the first display mode and are presented on the first, second and third display device respectively. Thus, an alerting output is made for the object. If the determination is positive, the process proceeds to step S31 where the first, second and third images are produced according to a second display mode and are presented on the first, second and third display device respectively. Thus, an alerting output is made for the object.

The first display mode was described with reference to Figs. 3-5 and is a mode of producing the first to third images for display such that the information contained reduces from the first to the third images. The second display mode is a mode of producing the first to the third images for display such that the difference of information volume among the first to the third images in the first display mode is moderated (lessened).

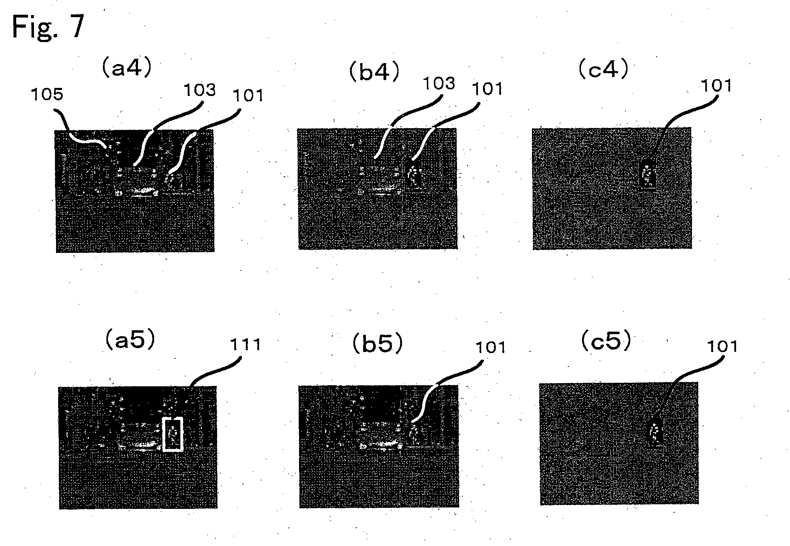

In Fig. 7, (a4), (b4) and (c4) shows examples of images according to the second display mode whereas (a1), (a2) and (c2) in Fig. 4 are the images according to the first display mode. (a4) shows the first image corresponding to (a1). (b4) shows the second image wherein contrast of the regions other than the object (pedestrian 101) of gray scale image (a1) is decreased. Reduction of the contrast is smaller than the reduction of contrast for production of the image of (b1). As a result, information on another vehicle 103 and other features than the pedestrian 101 may be recognized. Difference of information between the images of (a4) and (b4) is smaller than that for the images of (a1) and (b1).

In Fig. 7, (c4) shows the third image, which corresponds to (b1) of Fig. 4. Contrast in other regions than the object in the image of (b4) is further lowered. In the image of (c4), essentially only the pedestrian 101 is recognizable. Difference of information between the images of (a4) and (c4) is smaller than that for the images of (a1) and (c1).

Fig. 7 (a5), (b5) and (c5) show examples of the second display mode, corresponding to Fig. 5 (a3), (b3) and (c3) of the first display mode (a5) shows the first image, which is the same as Fig. 5 (a3). (b5) shows the second image, which is the same as Fig. 5 (b3). (c5) shows the third image, which is the same as Fig. 4 (b1). Difference of information volume between (a5) and (b5) is the same as difference of information volume between Fig. 5 (a3) and (b3). In the image of (c5), pedestrian 101 is substantially recognizable. Thus, difference of information volume between (a5) or (b5) and (c5) is less than the difference of information volume between (b3) and (c3). This way, in the second display mode, difference of information volume between arbitrary two display devices among a plurality of display devices may be made smaller.

When the distance to the pedestrian 101 or the time to reach the pedestrian 101 is larger than a predetermined value, there is a lead time to reach the object. In such a case, difference of information volume may be made smaller to permit certain gazing time for the second and third display devices 32 and 33.

Fig. 7 merely shows examples of one embodiment. In the second display mode, the first through the third images may all be the same. In this case, there is no difference of information volume among the first through the third images. In the illustrated examples, the first through the third images are produced such that the object region is recognizable. The invention is not limited to such arrangement. For example, the third image may be produced such that the pedestrian 101 is not recognizable as shown in Fig. 4(c1) and (c2).

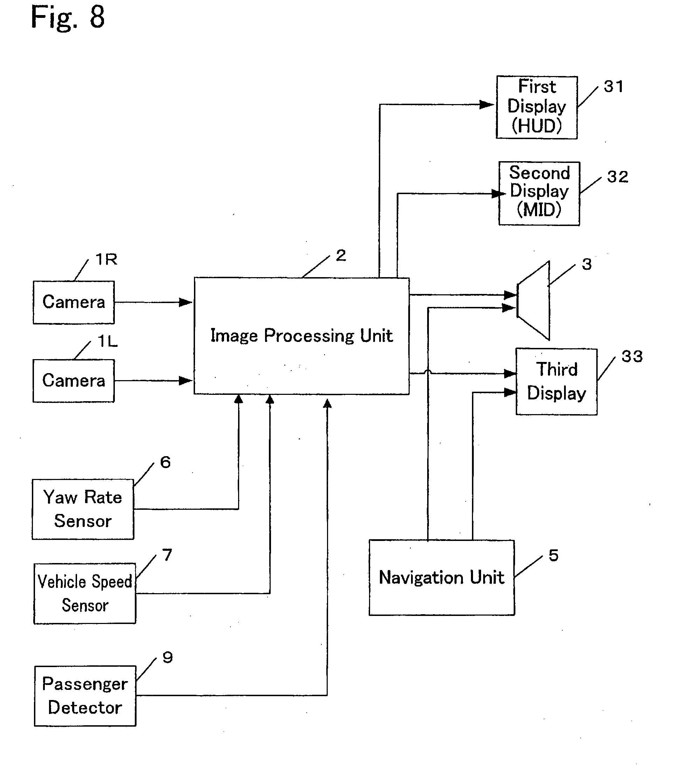

Fig. 8 illustrates a block diagram of surroundings monitoring system for a vehicle according to another embodiment of the present invention. The system includes a passenger detecting device 9 that detects passengers other than the driver. In this embodiment, the system detects a passenger in the passenger seat next to the driver's seat. The detecting device 9 may be made with a known art. For example, a sensor may be provided to the passenger's seat to detect seated passenger. Alternatively, a camera may be provided in the vehicle for imaging the passenger's seat to detect a passenger in the seat.

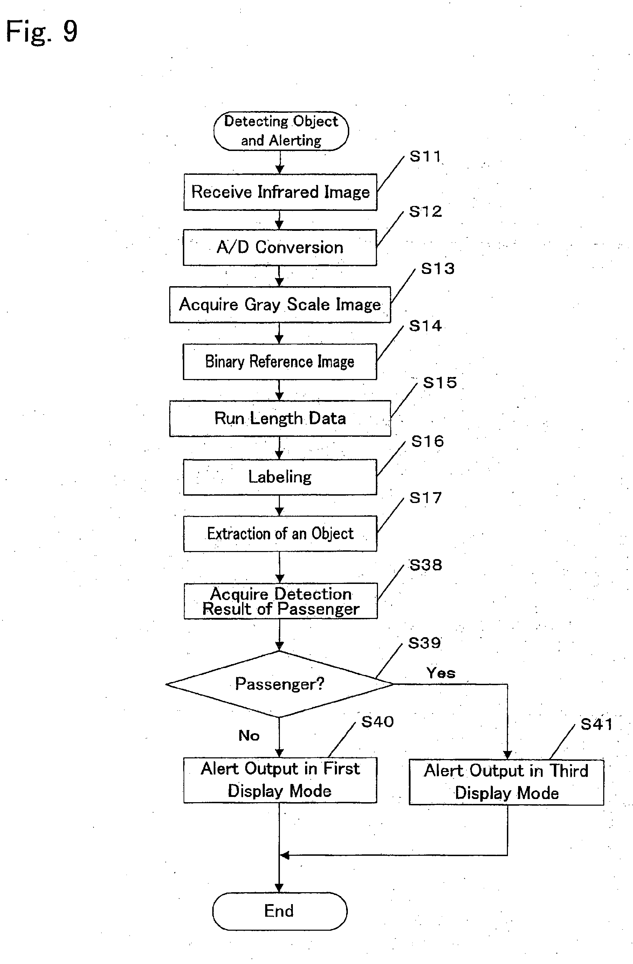

When a passenger is detected by the detecting device 9, a third display mode may be used to produce a first through a third images to present on the display devices 31- 33. This process will be described referring to Fig. 9.

Fig. 9 illustrates a flow chart of the process performed by image processing unit 2 in accordance with the embodiment of Fig. 8. The process is performed with a predetermined time interval. Steps S11 - S17 are the same as those illustrated in Fig. 3.

In step S38, a result of passenger detection by the detecting device 9 is acquired. In step S39, determination is made whether or not a passenger is in the passenger's seat next to the driver's seat. If negative, the process proceeds to step S40 to produce an alerting output in the first display mode. This step is the same as step S18 in Fig. 3 and step S30 in Fig. 6.

If the determination is positive, the process proceeds to step S41 to produce an alerting output in the third display mode.

The third display mode is a mode for suppressing, as compared to the first display mode, reduction of information volume of the image to be displayed on a display device near the detected passenger. Preferably, the display device that is nearest to the detected passenger is identified, and the information volume of the image to be presented on the nearest display device is not reduced as in the first display mode.

In this embodiment, the nearest display device is the third display device 33. Information volume of the third image is modified. As a specific example, the third image is produced to have the same information volume as the second or the first image, and is presented to the third display device. 33.

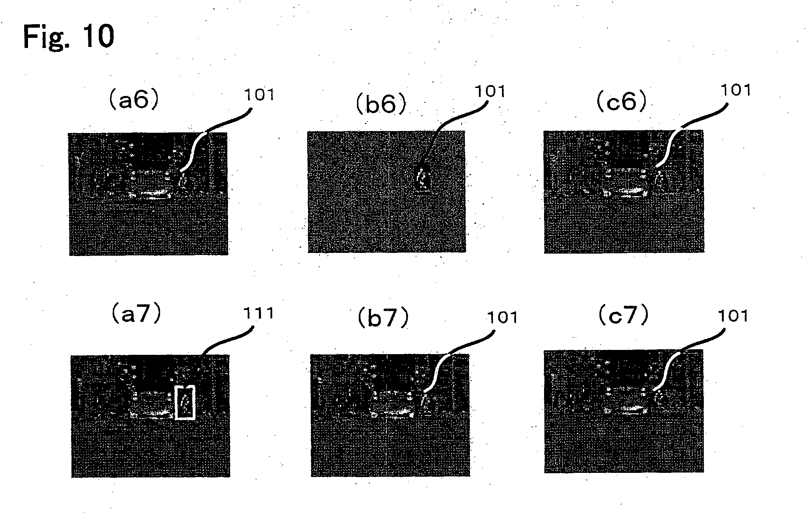

Fig. 10 shows examples of the third display mode. Images (a6), (b6) and (c6) are the first, second and third images respectively with the images of the first display mode being Fig. 4 (a1), (b1) and (c1). The third image (c6) is the same as the first image of (a6) without reduction of information volume from the first image. The third image (c6) includes an increased information volume from the second image of (b6).

As an another example, images of (a7), (b7) and (c7) represent the first, second and third images respectively with the first display mode being Fig. 5 (a3), (b3) and (c3). The third image (c7) is the same as the second image (b7) without reduction of information volume from the second image in contrast to the first display mode. As compared to the first display mode, reduction of information volume from the first image (a7) is small.

In these examples, the third image in the third display mode is produced the same as the first or the second image. Alternatively, the third image in the third display mode may be produced to have an information volume less than the first or the second image but larger than the third image in the first display mode. For example, in lieu of the third image of Fig. 10 (c7), the third image may be like Fig. 10 (b6) in which only the detected object (pedestrian 101) is substantially recognizable.

Thus, when a passenger is in the passenger's seat next to the driver's seat, reduction of information volume for the display device that is located nearest to the passenger is suppressed providing a display screen that is easy to recognize. The passenger may view the display screen and advise the driver of the contents.

The embodiment (Fig. 6) using the second display mode and the embodiment (Fig. 10) using the third display mode may be combined. When the distance or reaching time to the object is larger than a predetermined value, the third, second and third images may be produced so that difference of information volume among the first, second and third images is smaller than that in the first display mode. The image for the display device located nearest to the detected passenger may be produced by suppressing reduction of information volume as compared to that in the first display mode.

In the embodiment, three display devices are used. The present invention may be implemented using two or more display devices. When three or more display devices are provided, at least two display devices should be controlled for reduction of information volume in the first display mode, reduction of difference of information volume in the second display mode, and suppression of reduction of information volume in the third display mode. Thus, not all the display devices need be controlled.

In the above embodiment, a far infrared camera is used. The present invention may be practiced using other cameras (such as visible light cameras). In the above embodiment, a pedestrian is detected. In addition to a pedestrian, an animal may be detected solely or along with the pedestrian.

In the above embodiment, warning for a detected object is presented via one or more display devices. In addition, speaker 3 may be used to inform the driver of the existence of the object.

Specific embodiments of the present invention are described above. The present invention is not limited to such embodiments, but may encompass any embodiments which fall within the scope of the appended claims.

## Claims

1. A system for monitoring surroundings of a vehicle (10), comprising:
an image processing unit (2) having a processor and a memory;
an imaging device (1 R, 1 L) that captures images of the surroundings of the vehicle (10); and
a plurality of display devices (31, 32, 33) placed at a plurality of locations visible from the driver;
the image processing unit (2) being configured to:
detect an object in the surroundings of a vehicle (10) based on images captured by the imaging device (1 R, 1 L);
present to the display devices (31, 32, 33) images that are produced based on the captured image; and
alert a driver of the existence of the detected object through the display devices,
wherein the system is **characterized in that**, for at least two among the display devices (31, 32, 33), the image processing unit (2) is adapted to reduce the volume of information to be displayed on the display screen of the display device (32, 33) that requires a larger movement of the line of sight for the driver to recognize the display screen from the reference line of sight (L1) that looks straight ahead in comparison to the volume of information to be displayed on the display device (31) that requires a smaller movement of the line of sight for the driver.

2. The system of claim 1, wherein the image processing unit (2) is further configured to:
calculate time for the vehicle (10) to reach the object; and
reduce difference of information volume among the display devices (31, 32, 33) placed at the plurality of locations as the calculated time is longer.

3. The system of claim 1, wherein the image processing unit (2) is further configured to:
detect a passenger other than the driver; and
suppress reduction of information volume for the displace device (33) near the passenger when the passenger is detected.

4. The system of claim 1,
wherein the display devices (31, 32, 33) comprise a first display device (31), a second displace device (32) and a third display device (33), and
wherein the image processing unit (2) is adapted to present a first image to the first displace device (31), a second image to the second display device (32) and a third image to the third display device (33) according to a first display mode in which volume of information decreases from the first image to the third image.

5. The system of claim 1,
wherein the display devices (31, 32, 33) comprise a first display device (31), a second displace device (32) and a third display device (33), and
wherein the image processing unit (2) is adapted to present a first image to the first displace device (31), a second image to the second display device (32) and a third image to the third display device (33) according to a second display mode in which the difference of volume of information among the first image to the third image is moderated.

6. The system of claim 3,
wherein the display devices (31, 32, 33) comprise a first display device (31), a second displace device and a third display device (33); and
wherein the image processing unit (2) is adapted to present a first image to the first displace device (31), a second image to the second display device (32) and a third image to the third display device (33) according to a third display mode when the passenger is detected; and
wherein, in the third display mode, the image processing unit (2) is adapted to suppress reduction of information volume of the image to be displayed on a display device (33) near the detected passenger.

7. A method for monitoring surroundings of the vehicle, comprising:
detecting (S17) an object in the surroundings of a vehicle (10) based on images captured (S11) by an imaging device (1R, 1L) that captures images of the surroundings of the vehicle (10);
displaying on display devices (31, 32, 33) display images that are produced based on the captured image, the display devices (31, 32, 33) being placed at a plurality of locations visible from the driver; and
alerting (S40, S41) a driver of the existence of an object through the display devices (31, 32, 33) when an object is detected;
wherein the method is **characterized in that**, for at least two among the display devices (31, 32, 33), the alerting step reduces the volume of information to be displayed on the display screen of the display device (32, 33) that requires larger movement of line of sight for the diver to recognize the display screen from the reference line of sight (L1) that looks straight ahead in comparison to the volume of information to be displayed on the display device (31) that requires a smaller movement of the line of sight for the driver.

8. The method of claim 7, further comprising:
calculating (S28) time for the vehicle (10) to reach the object, wherein, as the time is longer, difference of information volume among the display devices (31, 32, 33) placed at the plurality of locations is made smaller.

9. The method of claim 7, further comprising:
detecting (S39) a passenger other than the driver, wherein, when the passenger is detected, reduction of information volume for a display device near the passenger is suppressed (S41).

## Patentansprüche

1. System zur Überwachung einer Umgebung von einem Fahrzeug (10), umfassend:
eine Bildverarbeitungseinheit (2) mit einem Prozessor und einem Speicher,
eine Bildgebungseinrichtung (1 R, 1 L), die Bilder der Umgebung des Fahrzeugs (10) aufnimmt, und
eine Mehrzahl von Anzeigeeinrichtungen (31, 32, 33), die an einer Mehrzahl von Stellen platziert sind, welche von dem Fahrer aus sichtbar sind,
wobei die Bildverarbeitungseinheit (2) dazu konfiguriert ist:
ein Objekt in der Umgebung eines Fahrzeugs (10) zu detektieren, auf Basis von Bildern, die durch die Bildgebungseinrichtung (1 R, 1 L) aufgenommen werden,
Bilder, die auf Basis von dem aufgenommenen Bild erzeugt werden, auf denAnzeigeeinrichtungen (31, 32, 33) anzuzeigen, und
einen Fahrer durch die Anzeigeeinrichtungen auf die Existenz des detektierten Objekts aufmerksam zu machen,
wobei das System **dadurch gekennzeichnet ist, dass** für wenigstens zwei unter den Anzeigeeinrichtungen (31, 32, 33), die Bildverarbeitungseinheit (2) dazu angepasst ist, das Volumen von Informationen zu reduzieren, das auf dem Anzeigebildschirm derjenigen Anzeigeeinrichtung (32, 33) anzuzeigen ist, die für den Fahrer eine größere Bewegung der Sichtlinie von der geradeaus schauenden Referenz-Sichtlinie (L1) aus erfordert, um den Anzeigebildschirm zu erkennen, im Vergleich zu dem Volumen von Informationen, das auf derjenigen Anzeigeeinrichtung (31) anzuzeigen ist, welche eine kleinere Bewegung der Sichtlinie für den Fahrer erfordert.

2. System nach Anspruch 1, wobei die Bildverarbeitungseinheit (2) weiter dazu konfiguriert ist:
eine Zeit zu berechnen, damit das Fahrzeug (10) das Objekt erreicht, und
eine Informationsvolumen-Differenz unter den Anzeigeeinrichtungen (31, 32, 33) zu reduzieren, die an der Mehrzahl von Stellen platziert sind, wenn die berechnete Zeit größer ist.

3. Das System nach Anspruch 1, wobei die Bildverarbeitungseinheit (2) weiter dazu konfiguriert ist:
einen anderen Passagier als den Fahrer zu detektieren, und
dann, wenn der Passagier erfasst wird, eine Reduktion eines Volumens von Informationen für die Anzeigeeinrichtung (33) nahe an dem Passagier zu unterdrücken.

4. System nach Anspruch 1,
wobei die Anzeigeeinrichtungen (31, 32, 33) eine erste Anzeigeeinrichtung (31), ein zweite Anzeigeeinrichtung (32) und eine dritte Anzeigeeinrichtung (33) umfassen, und
wobei die Bildverarbeitungseinheit (2) dazu angepasst ist, ein erstes Bild auf der ersten Anzeigeeinrichtung (31), ein zweites Bild auf der zweiten Anzeigeeinrichtung (32) und ein drittes Bild auf der dritten Anzeigeeinrichtung (33) anzuzeigen, gemäß einem ersten Anzeigemodus, in welchem ein Volumen von Informationen von dem ersten Bild zu dem dritten Bild hin abnimmt.

5. System nach Anspruch 1,
wobei die Anzeigeeinrichtungen (31, 32, 33) eine erste Anzeigeeinrichtung (31), eine zweite Anzeigeeinrichtung (32) und eine dritte Anzeigeeinrichtung (33) umfassen, und
wobei die Bildverarbeitungseinheit (2) dazu angepasst ist, ein erstes Bild auf der ersten Anzeigeeinrichtung (31), ein zweites Bild auf der zweiten Anzeigeeinrichtung (32) und ein drittes Bild auf der dritten Anzeigeeinrichtung (33) anzuzeigen, gemäß einem zweiten Anzeigemodus, in welchem die Informationsvolumen-Differenz unter dem ersten Bild bis dem dritten Bild gemäßigt wird.

6. System nach Anspruch 3,
wobei die Anzeigeeinrichtungen (31, 32, 33) eine erste Anzeigeeinrichtung (31), eine zweite Anzeigeeinrichtung und eine dritte Anzeigeeinrichtung (33) umfassen, und
wobei die Bildverarbeitungseinheit (2) dazu angepasst ist, ein erstes Bild auf der ersten Anzeigeeinrichtung (31), ein zweites Bild auf der zweiten Anzeigeeinrichtung (32) und ein drittes Bild auf der dritten Anzeigeeinrichtung (33) anzuzeigen, gemäß einem dritten Anzeigemodus, wenn der Passagier erfasst wird, und
wobei die Bildverarbeitungseinheit (2) in dem dritten Anzeigemodus dazu angepasst ist, eine Reduktion von einem Volumen von Informationen des Bildes zu unterdrücken, das auf einer Anzeigeeinrichtung (33) nahe an dem detektierten Passagier anzuzeigen ist.

7. Verfahren zur Überwachung einer Umgebung des Fahrzeugs, umfassend:
Detektieren (S17) eines Objekts in der Umgebung von einem Fahrzeug (10) auf Basis von Bildern, die durch eine Bildgebungseinrichtung (1 R, 1 L) erfasst werden (S11), welche Bilder von der Umgebung des Fahrzeugs (10) aufnimmt,
Anzeigen auf Anzeigeeinrichtungen (31, 32, 33) von Anzeigebildern, die auf Basis von dem erfassten Bild erzeugt werden, wobei die Anzeigeeinrichtungen (31, 32, 33) an einer Mehrzahl von Stellen platziert sind, die von dem Fahrer aus sichtbar sind, und Aufmerksam-Machen (S40, S41) eines Fahrers durch die Anzeigeeinrichtungen (31, 32, 33) auf die Existenz eines Objekts, wenn ein Objekt erfasst wird,
wobei das Verfahren **dadurch gekennzeichnet ist, dass** für wenigstens zwei unter den Anzeigeeinrichtungen (31, 32, 33) der Schritt des Aufmerksam-Machens das Volumen von Informationen reduziert, das auf dem Anzeigebildschirm derjenigen Anzeigeeinrichtung (32, 33) anzuzeigen ist, welche für den Fahrer von der geradeaus schauenden Referenz-Sichtlinie (L1) aus eine größere Bewegung der Sichtlinie erfordert, um den Anzeigebildschirm zu erkennen, im Vergleich zu dem Volumen der Informationen, das auf der Anzeigeeinrichtung (31) anzuzeigen ist, welche eine kleinere Bewegung der Sichtlinie für den Fahrer erfordert.

8. Verfahren nach Anspruch 7, weiter umfassend:
Berechnen (S28) einer Zeit für das Fahrzeug (10), um das Objekt zu erreichen, wobei dann, wenn die Zeit länger ist, eine Informationsvolumen-Differenz unter den Anzeigeeinrichtungen (31, 32, 33), die an der Mehrzahl von Stellen platziert sind, kleiner gemacht wird.

9. Verfahren nach Anspruch 7, weiter umfassend:
Detektieren (S39) eines anderen Passagiers als des Fahrers, wobei dann, wenn der Passagier detektiert wird, eine Reduktion eines Volumens von Informationen für eine Anzeigeeinrichtung nahe dem Passagier unterdrückt wird (S41).

## Revendications

1. Système de surveillance des alentours d'un véhicule (10), comprenant :
une unité de traitement d'images (12) comportant un processeur et une mémoire ;
un dispositif d'imagerie (1R, 1L) qui capture des images des alentours du véhicule (10) ; et
une pluralité de dispositifs d'affichage (31, 32, 33) placés en une pluralité d'emplacements visibles par le conducteur ;
l'unité de traitement d'images (2) étant configurée pour :
détecter un objet dans les alentours d'un véhicule (10) d'après des images capturées par le dispositif d'imagerie (1R, 1L) ;
présenter aux dispositifs d'affichage (31, 32, 33) des images qui sont produites d'après l'image capturée ; et
alerter un conducteur de l'existence de l'objet détecté par l'intermédiaire des dispositifs d'affichage,
dans lequel le système est **caractérisé en ce que**, pour au moins deux parmi les dispositifs d'affichage (31, 32, 33), l'unité de traitement d'images (2) est adaptée pour réduire le volume d'informations à afficher sur l'écran d'affichage du dispositif d'affichage (32, 33) qui nécessite un mouvement plus grand de la ligne de vision pour le conducteur afin qu'il reconnaisse l'écran d'affichage à partir de la ligne de vision de référence (L1) qui regarde droit devant en comparaison au volume d'informations à afficher sur le dispositif d'affichage (31) qui nécessite un mouvement plus petit de la ligne de vision pour le conducteur.

2. Système selon la revendication 1, dans lequel l'unité de traitement d'images (2) est en outre configurée pour :
calculer le temps nécessaire au véhicule (10) pour atteindre l'objet ; et
réduire une différence de volume d'informations parmi les dispositifs d'affichage (31, 32, 33) placés en la pluralité d'emplacements plus le temps calculé est long.

3. Système selon la revendication 1, dans lequel l'unité de traitement d'images (2) est en outre configurée pour :
détecter un passager autre que le conducteur ; et
supprimer une réduction de volume d'informations pour le dispositif d'affichage (33) près du passager lorsque le passager est détecté.

4. Système selon la revendication 1,
dans lequel les dispositifs d'affichage (31, 32, 33) comprennent un premier dispositif d'affichage (31), un deuxième dispositif d'affichage (32) et un troisième dispositif d'affichage (33), et
dans lequel l'unité de traitement d'images (2) est adaptée pour présenter une première image au premier dispositif d'affichage (31), une deuxième image au deuxième dispositif d'affichage (32) et une troisième image au troisième dispositif d'affichage (33) selon un premier mode d'affichage dans lequel le volume d'informations diminue de la première image à la troisième image.

5. Système selon la revendication 1,
dans lequel les dispositifs d'affichage (31, 32, 33) comprennent un premier dispositif d'affichage (31), un deuxième dispositif d'affichage (32) et un troisième dispositif d'affichage (33), et
dans lequel l'unité de traitement d'images (2) est adaptée pour présenter une première image au premier dispositif d'affichage (31), une deuxième image au deuxième dispositif d'affichage (32) et une troisième image au troisième dispositif d'affichage (33) selon un deuxième mode d'affichage dans lequel la différence de volume d'informations parmi la première image à la troisième image est modérée.

6. Système selon la revendication 3,
dans lequel les dispositifs d'affichage (31, 32, 33) comprennent un premier dispositif d'affichage (31), un deuxième dispositif d'affichage et un troisième dispositif d'affichage (33), et
dans lequel l'unité de traitement d'images (2) est adaptée pour présenter une première image au premier dispositif d'affichage (31), une deuxième image au deuxième dispositif d'affichage (32) et une troisième image au troisième dispositif d'affichage (33) selon un troisième mode d'affichage lorsque le passager est détecté ;
dans lequel, dans le troisième mode d'affichage, l'unité de traitement d'images (2) est adaptée pour supprimer une réduction de volume d'informations de l'image à afficher sur un dispositif d'affichage (33) près du passager détecté.

7. Procédé de surveillance des alentours du véhicule, comprenant :
la détection (S17) d'un objet dans les alentours d'un véhicule (10) d'après les images capturées (S11) par un dispositif d'affichage (1R, 1L) qui capture des images des alentours du véhicule (10) ;
l'affichage sur des dispositifs d'affichage (31, 32, 33) d'images d'affichage qui sont produites d'après l'image capturée, les dispositifs d'affichage (31, 32, 33) étant placés en une pluralité d'emplacements visibles par le conducteur ; et
l'alerte (S40, S41) d'un conducteur de l'existence d'un objet par l'intermédiaire des dispositifs d'affichage (31, 32, 33) lorsqu'un objet est détecté ;
dans lequel le procédé est **caractérisé en ce que**, pour au moins deux parmi les dispositifs d'affichage (31, 32, 33), l'étape d'alerte réduit le volume d'informations à afficher sur l'écran d'affichage du dispositif d'affichage (32, 33) qui nécessite un mouvement plus grand de la ligne de vision pour le conducteur afin qu'il reconnaisse l'écran d'affichage à partir de la ligne de vision de référence (L1) qui regarde droit devant en comparaison au volume d'informations à afficher sur le dispositif d'affichage (31) qui nécessite un mouvement plus petit de la ligne de vision pour le conducteur.

8. Procédé selon la revendication 7, comprenant en outre :
le calcul (S28) du temps nécessaire au véhicule (10) pour atteindre l'objet, dans lequel, plus le temps est long, plus la différence de volume d'informations parmi les dispositifs d'affichage (31, 32, 33) placés en la pluralité d'emplacements est réduite.

9. Procédé selon la revendication 7, comprenant en outre :
la détection (S39) d'un passager autre que le conducteur, dans lequel, lorsque le passager est détecté, la réduction de volume d'informations pour un dispositif d'affichage près du passager est supprimée (S41).
